# EUROPEAN PATENT APPLICATION

(11) **EP 4 643 634 A1**
(43) Date of publication of application: **05.11.2025**
(21) Application number: 24881461.8
(22) Date of filing: 14.10.2024
(51) Int. Cl.: A01G 3/08, B27B 17/02

(54) **CHAIN SAW**

(30) Priority: 26.10.2023 CN 202322879747 U; 26.10.2023 CN 202322892553 U; 26.10.2023 CN 202322901534 U
(71) Applicant: Nanjing Chervon Industry Co., Ltd., Nanjing, Jiangsu 211106 (CN)
(72) Inventor: PAN, Chengxin, Nanjing, Jiangsu 211106 (CN); LI, Yang, Nanjing, Jiangsu 211106 (CN)
(74) Representative: Sun, Yiming
(86) International application number: PCT/CN2024/124710
(87) International publication number: WO 2025/087095

(57) **Abstract**

Provided is a chainsaw. The chainsaw includes: a housing including a body portion and a motor portion; a guide plate extending forward from the body portion; a chain disposed around the guide plate; a drive assembly including an electric motor, where the electric motor is at least partially accommodated in the motor portion; a top handle disposed and connected on the body portion; and a side handle disposed on the left side of the body portion or the right side of the body portion. The motor portion and the side handle are disposed on the same side of the body portion. The body portion includes a power supply mounting portion. The chainsaw further includes a power supply device detachably connected to the power supply mounting portion and configured to power at least the electric motor. The power supply device has a first support unit. The first support unit supports the chainsaw to stand. When the chainsaw stands, the included angle between the guide plate center line of the guide plate and a normal vector of a support surface is less than or equal to 20°.

## Description

This application claims priority to Chinese Patent Application No. 202322879747.6 filed with the China National Intellectual Property Administration (CNIPA) on Oct. 26, 2023, Chinese Patent Application No. 202322892553.X filed with the CNIPA on Oct. 26, 2023, and Chinese Patent Application No. 202322901534.9 filed with the CNIPA on Oct. 26, 2023, the disclosures of which are incorporated herein by reference in their entireties.

### TECHNICAL FIELD

The present application relates to the technical field of power tools, for example, a chainsaw.

### BACKGROUND

A chainsaw is a common type of garden tool used for felling trees, cutting timbers, and other tasks, which has various advantages of being convenient to carry, being easy to operate, and the like and is widely used in various scenarios such as families and gardens. A chainsaw typically includes a housing, a guide plate, a chain disposed on the periphery of the guide plate, and an electric motor and an oil can that are accommodated in the housing. When the chainsaw works, the chain of the chainsaw is driven to rotate around the guide plate and cut a target object. In some cases, a user may hold the chainsaw and work on trees, and the working performance and user experience of the chainsaw still need to be further improved.

This part provides background information related to the present application, and the background information is not necessarily the existing art.

### SUMMARY

An object of the present application is to solve or at least alleviate part or all of the preceding problems. Therefore, the present application provides a chainsaw. The present application adopts the technical solutions below.

A chainsaw includes: a housing including a body portion and a motor portion; a guide plate extending forward from the body portion; a chain disposed around the guide plate; a drive assembly including an electric motor, where the electric motor is at least partially accommodated in the motor portion; a top handle disposed and connected on the body portion; and a side handle disposed on the left side of the body portion or the right side of the body portion. The motor portion and the side handle are disposed on the same side of the body portion. The body portion includes a power supply mounting portion. The chainsaw further includes a power supply device detachably connected to the power supply mounting portion and configured to power at least the electric motor. The power supply device has a first support unit. The first support unit supports the chainsaw to stand. When the chainsaw stands, the included angle between the guide plate center line of the guide plate and a normal vector of a support surface is less than or equal to 20°.

A chainsaw includes: a housing including a body portion and a motor portion; a guide plate extending forward from the body portion; a chain disposed around the guide plate; a drive assembly including an electric motor, where the electric motor is at least partially accommodated in the motor portion; a top handle disposed and connected on the body portion; and a side handle disposed on the left side of the body portion or the right side of the body portion. The motor portion and the side handle are disposed on the same side of the body portion. The body portion includes a power supply mounting portion. The chainsaw further includes a power supply device detachably connected to the power supply mounting portion and configured to power at least the electric motor. The power supply device has a first support unit. The first support unit supports the chainsaw to stand. When the chainsaw stands, the guide plate center line of the guide plate is substantially perpendicular to a support surface.

A chainsaw includes: a housing including a body portion and a motor portion; a guide plate extending forward from the body portion; a chain disposed around the guide plate; a drive assembly including an electric motor, where the electric motor is at least partially accommodated in the motor portion; a top handle disposed and connected on the body portion; and a side handle disposed on the left side of the body portion or the right side of the body portion. The motor portion and the side handle are disposed on the same side of the body portion. The body portion includes a power supply mounting portion. The chainsaw further includes a power supply device detachably connected to the power supply mounting portion and configured to power at least the electric motor. The power supply device has a first support unit. The first support unit supports the chainsaw to stand.

In some examples, the first support unit is a surface support unit.

In some examples, a projection of the electric motor and a projection of the top handle along an up and down direction do not coincide.

In some examples, the motor diameter of the electric motor is greater than or equal to 30 mm and less than or equal to 38 mm.

In some examples, the drive assembly further includes a transmission assembly, the transmission assembly is accommodated in the body portion, and the motor shaft of the electric motor is located below the output shaft of the chainsaw.

In some examples, a projection of the electric motor and a projection of the side handle along a left and right direction partially coincide, and a projection of the transmission assembly and the projection of the side handle along the left and right direction partially coincide.

In some examples, the ratio of the weight of a bare machine of the chainsaw to the first weight of the drive assembly is greater than or equal to 7.6, where the weight of the bare machine refers to the weight of the chainsaw not assembled with the guide plate, the chain, and the power supply device.

In some examples, the ratio of the average output power of the chainsaw to the weight of the bare machine is greater than or equal to 0.4 W/g and less than or equal to 0.7 W/g.

In some examples, the power supply mounting portion includes a power supply connection portion and a power supply support portion, where the power supply connection portion has a connection terminal to which the power supply device is detachably connected, and the power supply support portion supports the power supply device when the power supply device is connected to the power supply connection portion, and the chainsaw further includes a power supply unlocking member for a user to operate to disengage the power supply device from the power supply connection portion.

In some examples, the power supply connection portion has a second support unit, the power supply support portion has a third support unit, and in the case where the power supply device is not mounted on the chainsaw, the second support unit and the third support unit collectively support the chainsaw to stand.

In some examples, the body portion has a rear portion located below the handle rear end of the top handle, the chainsaw further includes a circuit board assembly disposed in the rear portion of the body portion, and the circuit board assembly is located between the power supply device and the drive assembly in a front and rear direction.

In some examples, the body portion has a front portion located below the handle front end of the top handle, and the chainsaw further includes an oil supply assembly, where the oil supply assembly includes an oil can loaded with lubricant for lubricating the chain and disposed in the front portion of the body portion, and the drive assembly is located between the oil supply assembly and a circuit board assembly in a front and rear direction.

A chainsaw includes: a housing including a body portion and a motor portion; a guide plate extending forward from the body portion; a chain disposed around the guide plate; and a drive assembly including an electric motor, where the electric motor is at least partially accommodated in the motor portion. The motor portion is disposed on the left side of the body portion or the right side of the body portion. The overall length of the housing of the chainsaw is less than or equal to 230 mm, where the overall length refers to the maximum length of the housing in a front and rear direction. The chainsaw further includes: a top handle disposed and connected on the body portion; and a side handle disposed on the same side of the body portion as the motor portion.

A chainsaw includes: a housing including a body portion and a motor portion; a guide plate extending forward from the body portion; a chain disposed around the guide plate; and a drive assembly including an electric motor, where the electric motor is at least partially accommodated in the motor portion. The motor portion is disposed on the left side of the body portion or the right side of the body portion. The overall length of the housing of the chainsaw is less than or equal to 230 mm, where the overall length refers to the maximum length of the housing in a front and rear direction. The chainsaw further includes: a top handle disposed and connected on the body portion; and a side handle disposed on the same side of the body portion as the motor portion. The body portion has a rear portion located below the handle rear end of the top handle. The body portion further includes a power supply mounting portion. The chainsaw further includes: a circuit board assembly disposed in the rear portion of the body portion; and a power supply device detachably connected to the power supply mounting portion and configured to power at least the electric motor. The circuit board assembly is located between the power supply device and the drive assembly in the front and rear direction.

In some examples, the ratio of the average output power of the chainsaw to the overall length is greater than or equal to 4.8 W/mm.

In some examples, a ratio of a rotational speed of the chainsaw without any load to the overall length of the chainsaw is greater than or equal to 48.5 rpm/mm.

In some examples, a fourth width of the housing of the chainsaw is less than or equal to 80 mm, the body portion of the housing includes an intermediate portion and a chainwheel portion, the chainwheel portion and the motor portion are disposed on two sides of the intermediate portion in a left and right direction, respectively, and the fourth width refers to the distance between the left and right end surfaces of the intermediate portion of the housing.

In some examples, the ratio of the average output power of the chainsaw to the weight of a bare machine of the chainsaw is greater than or equal to 0.4 W/g and less than or equal to 0.7 W/g, where the weight of the bare machine refers to the weight of the chainsaw not assembled with the guide plate, the chain, and the power supply device.

In some examples, the chainsaw further includes a first switch disposed on the lower surface of the top handle and operated by a user to start or stop the electric motor, and the ratio of a first vertical distance from the first switch to the lower surface of the body portion to a second vertical distance from the first switch to the upper surface of the body portion is less than or equal to 4.

In some examples, the ratio of the section perimeter of a radial section of a grip of the top handle to the motor diameter of the electric motor is greater than or equal to 2.5.

In some examples, a first included angle between a first gripping axis of the top handle and the guide plate center line of the guide plate is less than or equal to 10°.

In some examples, a second included angle between a second gripping axis of the side handle and the first gripping axis is greater than or equal to 40° and less than or equal to 80°.

In some examples, the ratio of a first horizontal distance from the first intersection point of the first gripping axis and the second gripping axis to the rearmost side of the housing along the front and rear direction to a second horizontal distance from the first intersection point to the motor shaft of the electric motor is less than or equal to 3.6.

In some examples, the top handle has a handle front end and a handle rear end, and at least one of the handle front end and the handle rear end is connected to the body portion, and the side handle has a handle upper end and a handle lower end, and at least one of the handle upper end and the handle lower end is connected to the top handle or the body portion.

In some examples, a rear connection portion connected to the body portion is formed at the rear end of the top handle, and the ratio of the connection width of the rear connection portion to the handle width of the top handle is less than or equal to 2, where the connection width refers to the distance between the left and right end surfaces of the rear connection portion of the top handle, and the handle width refers to the maximum radial length of a radial section of a grip of the top handle.

A chainsaw includes: a housing including a body portion and a motor portion; a guide plate extending forward from the body portion; a chain disposed around the guide plate; a drive assembly including an electric motor, where the electric motor is at least partially accommodated in the motor portion; a top handle disposed and connected on the body portion; and a side handle disposed on the left side of the body portion or the right side of the body portion. The motor portion and the side handle are disposed on the same side of the body portion. The chainsaw further includes a power supply ejection mechanism and a hook, where in the case where the power supply device is mounted to the power supply mounting portion, the power supply ejection mechanism and the hook are located below the power supply device.

In some examples, the power supply ejection mechanism is at least partially exposed outside the housing.

In some examples, the chainsaw further includes a power supply unlocking member for a user to operate to disengage the power supply device from the power supply mounting portion, the power supply unlocking member is connected to the power supply mounting portion, and the power supply ejection mechanism includes an elastic member, which applies an elastic force to the power supply device to disengage the power supply device from the power supply mounting portion when the power supply unlocking member is operated by the user.

In some examples, a limit slot is formed on a surface of the power supply device, and when the power supply device is mounted to the power supply mounting portion, the power supply unlocking member mates with the limit slot to lock the power supply device.

In some examples, the elastic member has a contact portion that is in contact with the power supply device, and the contact portion is exposed outside the housing.

In some examples, the power supply ejection mechanism further includes a contact member at least partially exposed outside the housing, and in the case where the power supply device is mounted to the power supply mounting portion, one end of the contact member abuts against the power supply device and the other end of the contact member abuts against the elastic member.

In some examples, the power supply ejection mechanism includes a first elastic member and a second elastic member that are disposed on the left side of the power supply mounting portion and the right side of the power supply mounting portion, respectively.

In some examples, the power supply mounting portion of the housing is formed with a storage slot facing upward, and the hook is accommodated in the storage slot in a storage state.

In some examples, the storage slot is at least partially located between the first elastic member and the second elastic member in a left and right direction.

In some examples, a projection of the storage slot and a projection of the power supply ejection mechanism along the left and right direction partially coincide.

In some examples, the ejection direction of the power supply ejection mechanism acting on the power supply device is substantially perpendicular to a first gripping axis of the top handle.

### BRIEF DESCRIPTION OF DRAWINGS

FIG. 1 is a perspective view of a chainsaw as an example of the present application.
FIG. 2 is an exploded view of the chainsaw shown in FIG. 1.
FIG. 3 is a top view of the chainsaw shown in FIG. 1.
FIG. 4 is a left view showing some internal structures, a side handle, and a power supply device of the chainsaw shown in FIG. 1.
FIG. 5 is a left view showing some internal structures of the chainsaw shown in FIG. 1 not including a side handle and a power supply device.
FIG. 6 is a top view showing some internal structures of the chainsaw shown in FIG. 1 not including a housing.
FIG. 7 is a top view showing some internal structures, a top handle, and an electric motor of the chainsaw shown in FIG. 1.
FIG. 8 is a plan view showing the overall length, a first horizontal distance, and a second horizontal distance of the chainsaw shown in FIG. 1.
FIG. 9 is a plan view showing a first width, a connection width, and a handle width of the chainsaw shown in FIG. 1.
FIG. 10 is a cross-sectional view showing the perimeter of a cross section of a top handle and the motor diameter of an electric motor of the chainsaw shown in FIG. 1.
FIG. 11 is a perspective view showing a power supply mounting portion, a power supply ejection mechanism, and a hook of a housing of the chainsaw shown in FIG. 1.
FIG. 12 is a perspective view showing the power supply mounting portion of the housing shown in FIG. 11.
FIG. 13 is a plan view showing a power supply connection portion and a power supply unlocking member in the power supply mounting portion of the housing shown in FIG. 12.
FIG. 14 is a rear view showing the power supply ejection mechanism and the hook shown in FIG. 11.
FIG. 15 is a bottom view showing the power supply mounting portion, the power supply ejection mechanism, and the hook of the housing shown in FIG. 11.
FIG. 16 is a plan view showing the power supply ejection mechanism and the hook shown in FIG. 14.
FIG. 17 is a perspective view of a power supply device shown in FIG. 11.
FIG. 18 is a plan view of the chainsaw shown in FIG. 1 mounted with a power supply device and vertically placed.
FIG. 19 is a plan view of the chainsaw shown in FIG. 1 not mounted with a power supply device and vertically placed.
FIG. 20 is a plan view of the chainsaw shown in FIG. 1 horizontally placed.

### Reference list

- 100: chainsaw
- 200: power supply device
- 300: power supply ejection mechanism
- 400: hook
- 10: housing
- 20: guide plate
- 30: chain
- 40: drive assembly
- 50: top handle
- 60: side handle
- 70: circuit board assembly
- 80: oil supply assembly
- 90: heat dissipation assembly
- 110: body portion
- 111: chainwheel portion
- 112: intermediate portion
- 113: power supply mounting portion
- 114: storage slot
- 120: motor portion
- 410: electric motor
- 420: transmission assembly
- 510: grip
- 511: handle front end
- 512: handle rear end
- 520: first switch
- 611: handle upper end
- 612: handle lower end
- 810: oil can
- 820: oil pumping mechanism
- 911: airflow inlet
- 912: airflow outlet
- 920: heat dissipation plate
- 1131: power supply connection portion
- 1132: power supply support portion
- 1133: power supply unlocking member
- 1131a: power supply connection terminal
- 1132a: rear end surface of a housing
- 1132b: support pedestal
- 1133a: rotary member
- 1133b: biasing member
- 211: first support unit
- 212: limit slot
- 310: elastic member
- 320: contact member
- 310a: first elastic member
- 310b: second elastic member
- 101: normal vector of a support surface for horizontal placement
- 102: normal vector of a support surface for vertical placement
- 103: direction in which a power supply device is plugged or unplugged
- 201: guide plate center line
- 501: first gripping axis
- 601: second gripping axis
- L: overall length
- L1: first horizontal distance
- L2: second horizontal distance
- W1: first width
- D: motor diameter
- W2: connection width
- W3: handle width

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Technical solutions of the present application are described below in detail in conjunction with drawings and examples.

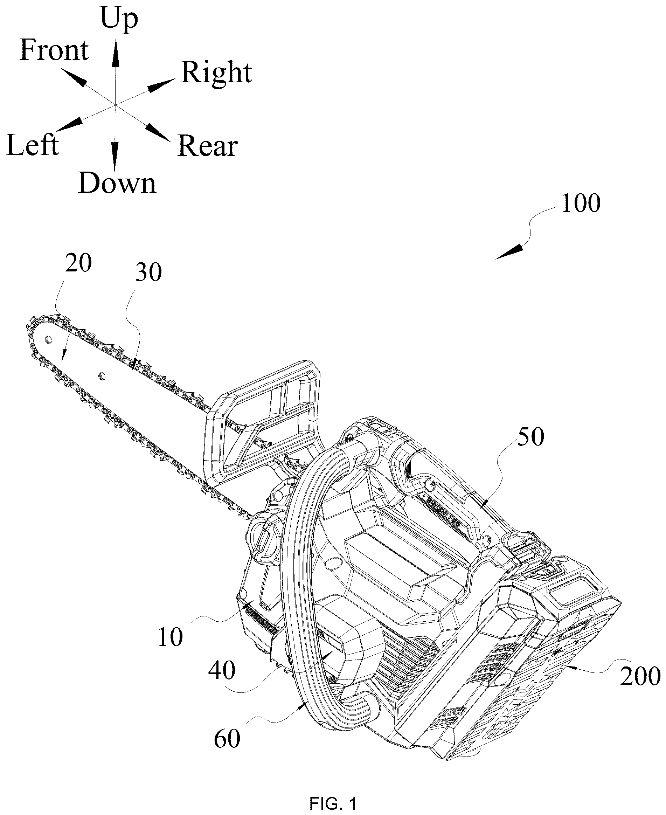

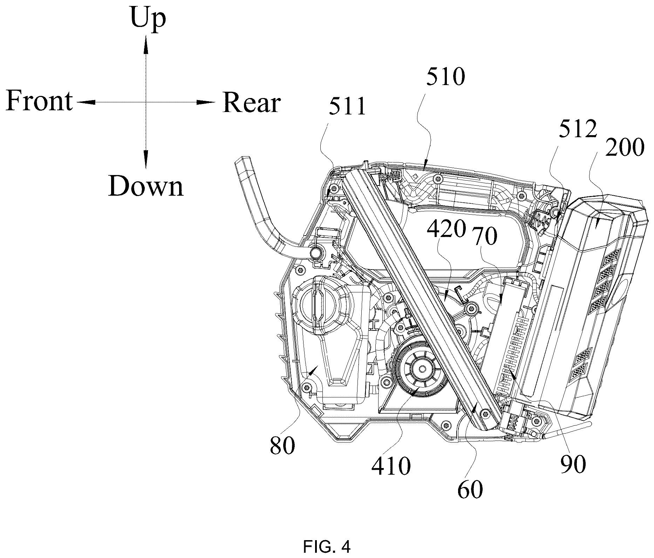

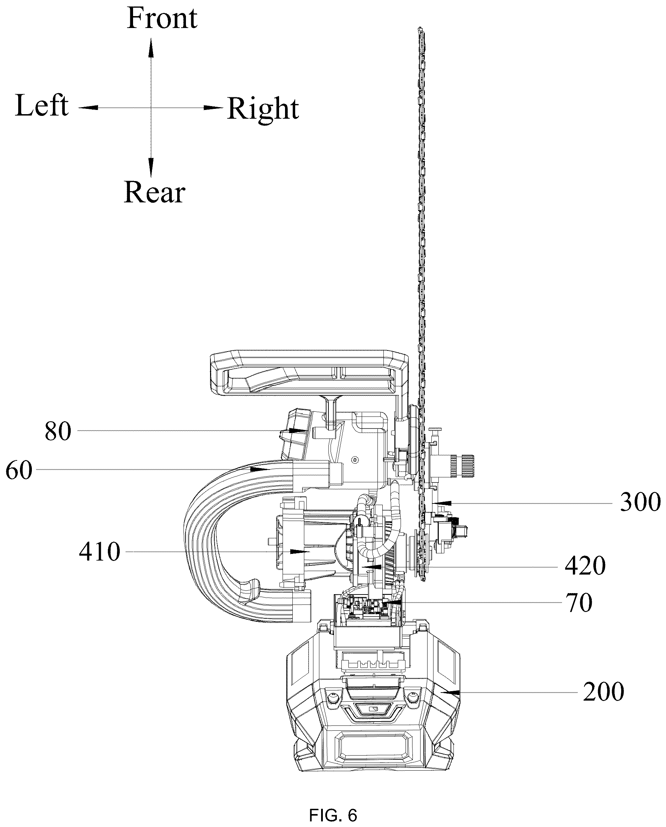

FIG. 1 shows a chainsaw 100 as an example in the present application. As shown in FIGS. 1 to 7, the chainsaw 100 includes a housing 10, a guide plate 20, a chain 30, and a drive assembly 40. In addition, directions in the present application including a front side, a rear side, an upper side, a lower side, a left side, and a right side are further defined in FIG. 1.

The housing 10 includes a body portion 110 and a motor portion 120. The housing 10 may be an integral member having the body portion 110 and the motor portion 120 or may be formed by the body portion 110 and the motor portion 120 that are fixedly connected to each other. Each of the body portion 110 of the housing 10 and the motor portion 120 of the housing 10 is formed with an accommodation space. An oil supply assembly 80 and a transmission assembly 420 in the drive assembly 40 to be described below may be accommodated in the accommodation space of the body portion 110. The guide plate 20 and the chain 30 may be partially accommodated in the accommodation space of the body portion 110 and are supported by the body portion 110 of the housing 10, but an electric motor 410 in the drive assembly 40 is at least partially accommodated in the accommodation space of the motor portion 120. In the positional relationship, the motor portion 120 is disposed on the left side of the body portion 110 or the right side of the body portion 110. The motor portion 120 is located on one of the left side of the body portion 110 and the right side of the body portion 110 while the guide plate 20 and the chain 30 are on the other of the left side of the body portion 110 and the right side of the body portion 110. In an example, the guide plate 20 and the chain 30 are on the right side of the body portion 110, and the motor portion 120 is on the left side of the body portion 110.

The guide plate 20 extends forward from the front end of the body portion 110 of the housing 10. Most of the guide plate 20 extends out of the housing 10, and a small rear portion of the guide plate 20 is accommodated in the housing 10. The guide plate 20 supports the chain 30 disposed around the periphery of the guide plate 20. The chain 30 is a functional member of the chainsaw 100. When the chainsaw 100 works, the chain 30 rotates around the guide plate 20 to cut a target member.

The drive assembly 40 includes the electric motor 410 and the transmission assembly 420. The electric motor 410 is a prime mover of the chainsaw 100. The transmission assembly 420 may be a gearbox formed by several gears. The motor shaft of the electric motor 410 rotates to drive a gear in the transmission assembly 420 meshing with the motor shaft, and the output shaft of the chainsaw 100 is finally driven to rotate so that the chain 30 rotates around the guide plate 20 and performs cutting. In the positional relationship, the electric motor 410 is mainly accommodated in the motor portion 120 of the housing 10, and the transmission assembly 420 is mainly accommodated in the body portion 110 of the housing 10. In some cases, the body portion 110 of the housing 10 is formed through the combination of left and right housings. The transmission assembly 420 is connected to the right housing of the body portion 110, and the motor portion 120 of the housing 10 is connected to the left housing of the body portion 110 and accommodates the electric motor 410. In this example, power transmission in the chainsaw 100 is implemented in the manner of combining a small electric motor with a transmission instead of the manner of a direct drive through a large electric motor. Thus, the size of the chainsaw 100 can be effectively reduced, and sufficient power can be ensured, thereby improving user experience. In some examples, the motor diameter D of the electric motor 410 is greater than or equal to 30 mm and less than or equal to 38 mm. In other examples, the motor diameter D of the electric motor 410 is greater than or equal to 34 mm and less than or equal to 36 mm. In some examples, the electric motor 410 is a brushless direct current motor 410 so that the size of the electric motor 410 is reduced and the performance of the electric motor 410 is also maintained.

In some examples, the motor shaft of the electric motor 410 may be disposed below the output shaft of the chainsaw 100, that is, the electric motor 410 is located below the transmission assembly 420 such as the gearbox. In some examples, the chainsaw 100 further includes a brake module. The brake module cooperates with a circuit board assembly 70 to be described below to brake the chainsaw in an electronic manner. In some examples, a mechanical brake assembly may not be included in the drive assembly 40 of the chainsaw 100 so that the size and weight of the chainsaw 100 are further reduced.

In some examples, the ratio of the weight of a bare machine of the chainsaw 100 to the first weight of the drive assembly 40 is greater than or equal to 7.6. In other examples, the ratio of the weight of the bare machine of the chainsaw 100 to the first weight of the drive assembly 40 is greater than or equal to 8.0. In other examples, the ratio of the weight of the bare machine of the chainsaw 100 to the first weight of the drive assembly 40 is greater than or equal to 8.4. The weight of the bare machine of the chainsaw 100 refers to the weight of the chainsaw 100 not assembled with the guide plate 20, the chain 30, and a power supply device 200 to be described below, and the first weight of the drive assembly 40 refers to the weight of the electric motor 410 and the transmission assembly 420. In an example, the weight of the bare machine of the chainsaw 100 is 1850 g, the first weight of the drive assembly 40 is 220 g, and the ratio of the weight of the bare machine to the first weight is 8.409.

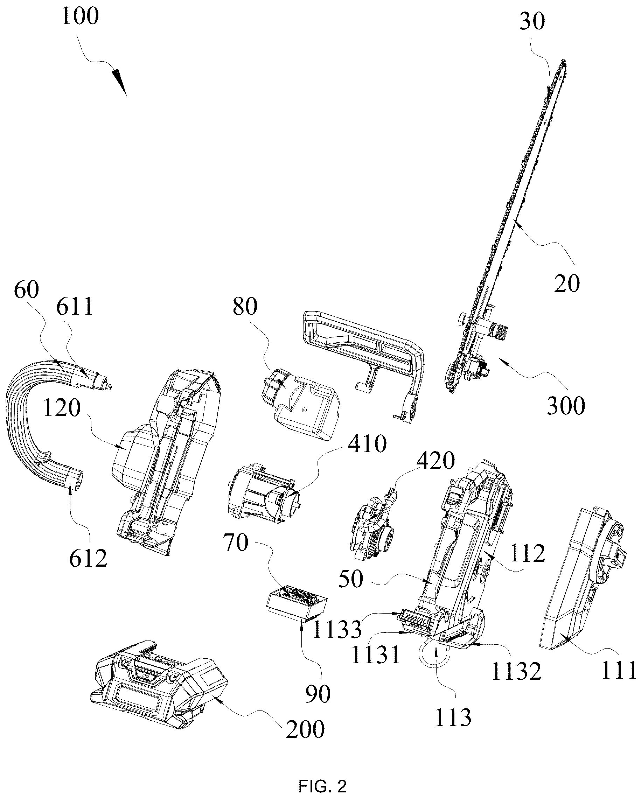

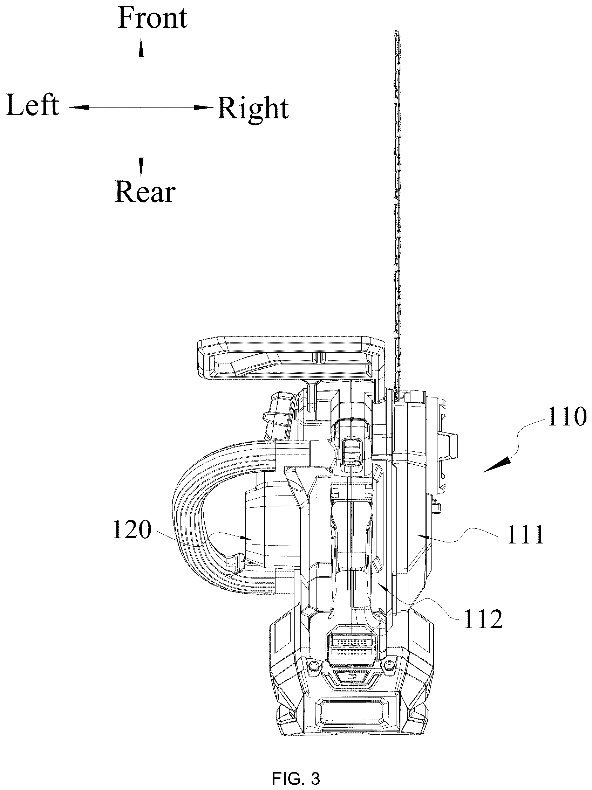

In some examples, the body portion 110 of the housing 10 of the chainsaw 100 may include a chainwheel portion 111, an intermediate portion 112, and a power supply mounting portion 113. The chainwheel portion 111 is configured to be mounted with the guide plate 20 and the chain 30 and further accommodates a tensioner mechanism for tensioning the chain 30 on the guide plate 20. The intermediate portion 112 is configured to accommodate components such as the transmission assembly 420 and the oil supply assembly 80. The power supply mounting portion 113 is configured to be mounted with the power supply device 200 such as a battery pack. As shown in FIGS. 2 and 3, in the positional relationship, the chainwheel portion 111 and the motor portion 120 are located on two sides of the intermediate portion 112 in a left and right direction, respectively, and the power supply mounting portion 113 is located behind the intermediate portion 112. In this example, the chainwheel portion 111, the guide plate 20, and the chain 30 are on the right side of the intermediate portion 112, and the motor portion 120 is on the left side of the intermediate portion 112.

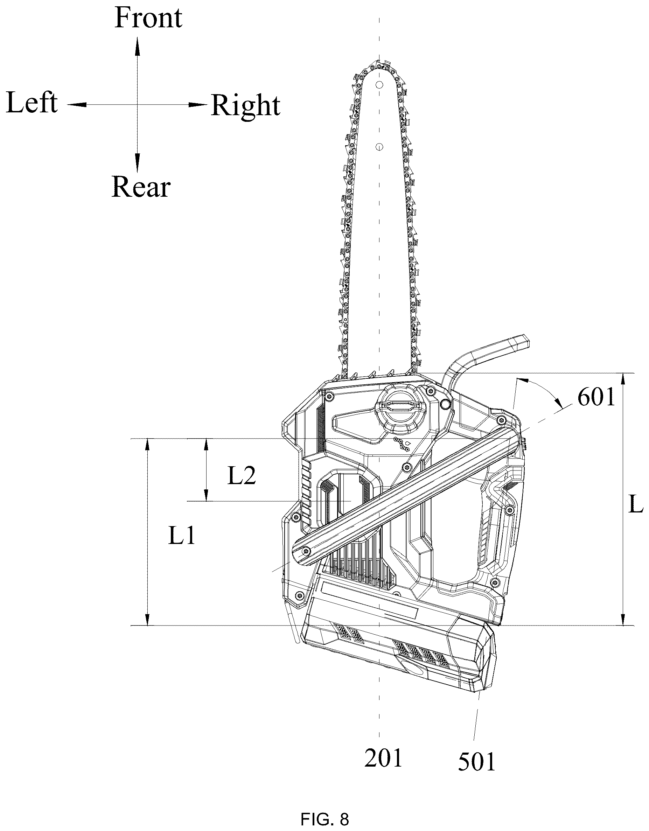

As shown in FIG. 8, the overall length L of the housing 10 of the chainsaw 100 is defined as the maximum length of the housing 10 of the chainsaw 100 in a front and rear direction. In this example, the overall length L of the housing 10 of the chainsaw 100 is the distance from the frontmost side of the intermediate portion 112 of the housing 10 to the rearmost side of the intermediate portion 112 of the housing 10.

In some examples, the ratio of the overall length L of the housing 10 of the chainsaw 100 to the guide plate length of the guide plate 20 is less than or equal to 0.8. In other examples, the ratio of the overall length L of the housing 10 of the chainsaw 100 to the guide plate length is less than or equal to 0.76. In other examples, the ratio of the overall length L of the housing 10 of the chainsaw 100 to the guide plate length is less than or equal to 0.72. The guide plate 20 with which the chainsaw 100 is assembled is typically a 12 inch guide plate. The guide plate length of the guide plate is 12*25.4 mm, that is, 304.8 mm. In an example, the overall length L of the housing 10 of the chainsaw 100 is 218 mm, the guide plate length of the guide plate 20 is 304.8 mm, and the ratio of the overall length L to the guide plate length is 0.715.

In some examples, the ratio of the average output power of the chainsaw 100 to the overall length L of the housing 10 of the chainsaw 100 is greater than or equal to 4.8 W/mm. The average output power of the chainsaw 100 represents the output performance of the chainsaw 100 with a load in a working process. If the average output power is calculated with a theoretical value, assuming that the output efficiency of the chainsaw 100 is 80%, the average output power of the chainsaw 100 with a rated voltage of 40 V and a rated current of 33 A may be regarded as 40 V * 33 A * 0.80, that is, 1056 W. If the average output power is calculated with experimental data, the average value of the output power of the chainsaw 100 in ten working processes may be used as the average output power of the chainsaw 100, or the average value of the output power of the chainsaw in more working processes may be used as the average output power of the chainsaw. In an example, the average output power of the chainsaw 100 is 1056 W, the overall length L of the housing 10 of the chainsaw 100 is 218 mm, and the ratio of the average output power to the overall length L is 4.844 W/mm.

In some examples, the ratio of a rotational speed of the chainsaw 100 without any load to the overall length L of the housing 10 of the chainsaw 100 is greater than or equal to 48.7 rpm/mm. In other examples, the ratio of the rotational speed of the chainsaw 100 without any load to the overall length L of the housing 10 of the chainsaw 100 is greater than or equal to 50 rpm/mm. In other examples, the ratio of the rotational speed of the chainsaw 100 without any load to the overall length L of the housing 10 of the chainsaw 100 is greater than or equal to 54 rpm/mm.

In some examples, the ratio of the average output power of the chainsaw 100 to the weight of the bare machine of the chainsaw 100 is greater than or equal to 0.4 W/g and less than or equal to 0.7 W/g.

In some examples, the ratio of the rotational speed of the chainsaw 100 without any load to the weight of the bare machine of the chainsaw 100 is greater than or equal to 5 rpm/g and less than or equal to 8 rpm/g.

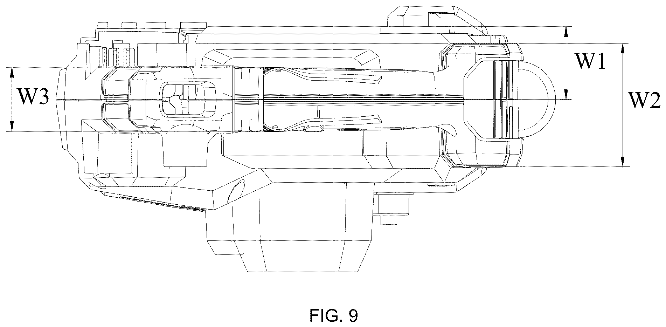

As shown in FIG. 9, a first width W1 of the housing 10 of the chainsaw 100 is defined as the distance between the central symmetry plane of a top handle 50 of the chainsaw 100 and an end surface of the chainwheel portion 111 of the housing 10 facing away from the motor portion 120. In this example, the first width W1 of the housing 10 of the chainsaw 100 is the distance from the central symmetry plane of the top handle 50 to the right end surface of the chainwheel portion 111 of the housing 10.

In some examples, the ratio of the first width W1 of the housing 10 of the chainsaw 100 to the guide plate length of the guide plate 20 is less than or equal to 0.2.

In some examples, the ratio of the average output power of the chainsaw 100 to the first width W1 of the housing 10 of the chainsaw 100 is greater than or equal to 15.5 W/mm. In other examples, the ratio of the average output power of the chainsaw 100 to the first width W1 of the housing 10 of the chainsaw 100 is greater than or equal to 16.3 W/mm. In other examples, the ratio of the average output power of the chainsaw 100 to the first width W1 of the housing 10 of the chainsaw 100 is greater than or equal to 17.1 W/mm.

In some examples, the ratio of the rotational speed of the chainsaw 100 without any load to the first width W1 of the housing 10 of the chainsaw 100 is greater than or equal to 175 rpm/mm.

A fourth width of the housing 10 of the chainsaw 100 is defined as the distance between the left and right end surfaces of the intermediate portion 112 of the housing 10 of the chainsaw 100 or the maximum length of the intermediate portion 112 in the left and right direction. In some examples, the fourth width of the housing 10 of the chainsaw 100 is less than or equal to 80 mm.

As shown in FIGS. 1 to 9, the chainsaw 100 further includes the top handle 50, a side handle 60, and the power supply device 200. The top handle 50 is a main gripping member when the user uses the chainsaw 100. The top handle 50 is disposed on the body portion 110 of the housing 10 and is connected to the body portion 110 of the housing 10. The two may be either integral or fixedly connected to each other. In this example, the top handle 50 has a shank shape and is located on the body portion 110 of the housing 10. A radial section of the grip 510 of the top handle 50 has a circle-like shape or a rectangle-like shape. The top handle 50 has a handle front end 511 and a handle rear end 512. The handle front end 511 and/or the handle rear end 512 may be connected to the body portion 110 of the housing 10.

As shown in FIG. 9, a rear connection portion 513 connected to the body portion 110 of the housing 10 is formed at the handle rear end 512 of the top handle 50 of the chainsaw 100. A connection width W2 of the rear connection portion 513 is defined as the distance between the left and right end surfaces of the rear connection portion 513 of the top handle 50, and a handle width W3 of the top handle 50 is defined as the maximum radial length of the radial section of the grip 510 of the top handle 50. In some examples, the ratio of the connection width W2 of the rear connection portion 513 of the top handle 50 of the chainsaw 100 to the handle width W3 is less than or equal to 2. In other examples, the ratio of the connection width W2 to the handle width W3 is less than or equal to 1.8.

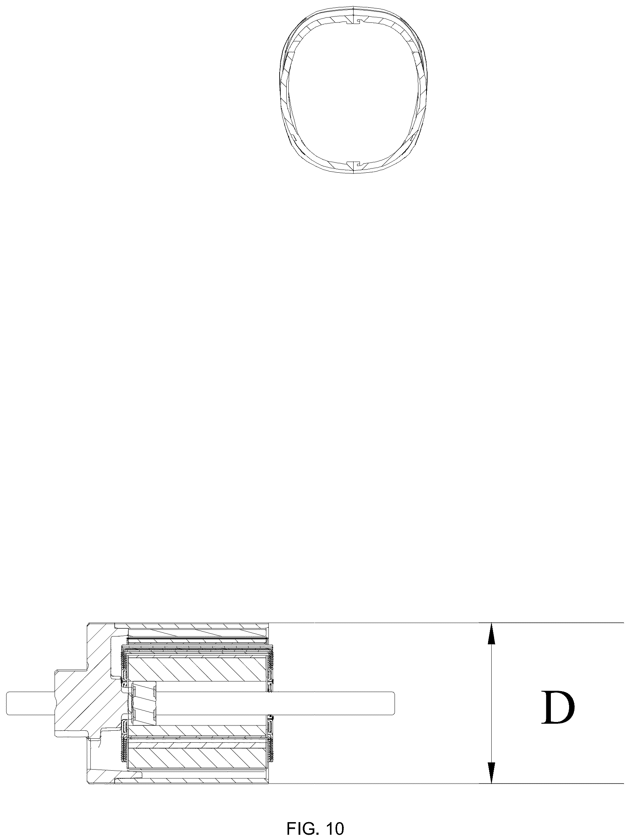

As shown in FIG. 10, the perimeter of a cross section of the top handle 50 of the chainsaw 100 is the section perimeter of the radial section of the grip 510 of the top handle 50, and the motor diameter D of the electric motor 410 is defined as the diameter of a motor sleeve, for example, the diameter of a rotor sleeve of the electric motor. In some examples, the ratio of the section perimeter of the radial section of the top handle 50 of the chainsaw 100 to the motor diameter D of the electric motor 410 is greater than or equal to 2.5. In other examples, the ratio of the section perimeter of the radial section of the top handle 50 to the motor diameter D of the electric motor 410 is greater than or equal to 2.8. In other examples, the ratio of the section perimeter of the radial section of the top handle 50 to the motor diameter D of the electric motor 410 is greater than or equal to 3.1.

In some examples, a first included angle between a first gripping axis 501 of the top handle 50 and the guide plate center line 201 of the guide plate 20 is less than or equal to 10°. This configuration allows the user to hold the chainsaw 100 comfortably and enables the chainsaw 100 to substantially have a stable body. In other examples, the first included angle between the first gripping axis 501 and the guide plate center line 201 is less than or equal to 5°. In other examples, the first included angle between the first gripping axis 501 and the guide plate center line 201 is less than or equal to 3°. The position of the intersection point of the first gripping axis 501 and the guide plate center line 201 is affected by the height relationship between the handle front end 511 of the top handle 50 and the handle rear end 512 of the top handle 50. In this example, the handle front end 511 is higher than the handle rear end 512, so the intersection point of the first gripping axis 501 and the guide plate center line 201 may be on the front side of the top handle 50.

In some examples, the handle front end 511 of the top handle 50 and the handle rear end 512 of the top handle 50 are each connected to the upper portion of the body portion 110 of the housing 10. In other examples, the handle front end 511 of the top handle 50 or the handle rear end 512 of the top handle 50 is connected to the upper portion of the body portion 110 of the housing 10, and the other end of the top handle 50 is suspended and is not connected to the body portion 110 of the housing 10.

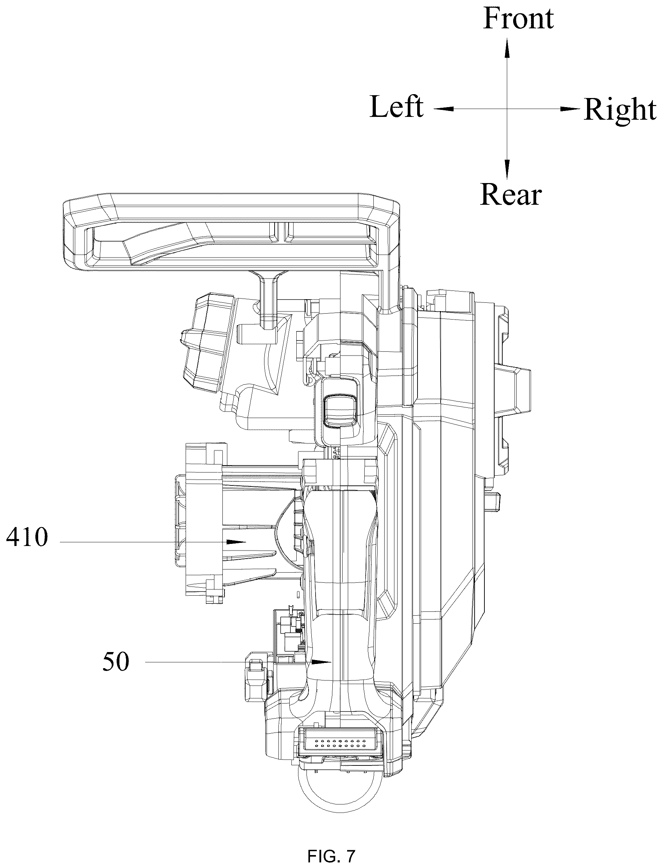

In some examples, as shown in FIG. 7, a projection of the top handle 50 and a projection of the electric motor 410 in the drive assembly 40 along an up and down direction are non-coincident substantially. In this example, most of the projection of the top handle 50 located on the housing 10 along the up and down direction coincides with a projection of the intermediate portion 112 of the housing 10 in the up and down direction. However, the projection of the top handle 50 located on the housing 10 and the projection of the electric motor 410 accommodated in the motor portion 120 of the housing 10 along the up and down direction are non-coincident substantially. That is, the electric motor 410 makes full use of the accommodation space of the motor portion 120 adjacent to the side handle 60 and substantially occupies no accommodation space of the intermediate portion 112. The transmission assembly 420 is not affected by the electric motor 410 so that the width of the intermediate portion 112 of the housing 10 is not increased, thereby effectively reducing the width of the housing 10, ensuring a compact structure of the chainsaw 100, and improving the hand feel of the user during use.

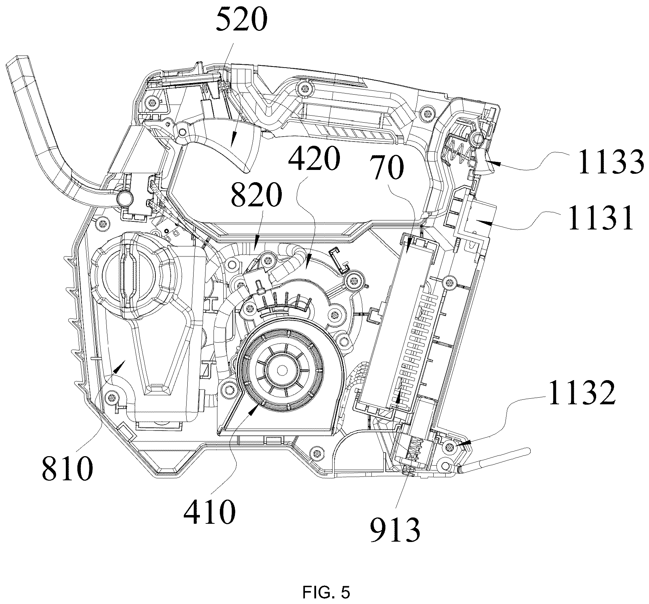

As shown in FIG. 5, the chainsaw 100 further includes a first switch 520 disposed on the lower surface of the top handle 50 and operated by the user to start or stop the electric motor 410 in the chainsaw 100. In this example, the first switch 520 may be a trigger switch. In some examples, the ratio of a first vertical distance from the lowest side of the first switch 520 to the lowest side of the lower surface of the housing 10 along the up and down direction to a second vertical distance from the lowest side of the first switch 520 to the upper surface of the body portion 110 of the housing 10 along the up and down direction is less than or equal to 4. In other examples, the ratio of the first vertical distance to the second vertical distance is less than or equal to 3.5.

In some examples, the chainsaw 100 further includes a first locking switch and a second locking switch. When either the first locking switch or the second locking switch is in a locking state, the electric motor 410 in the chainsaw 100 remains stopped. When both the first locking switch and the second locking switch are in an unlocking state, the user can operate the first switch 520 to start the electric motor 410 of the chainsaw 100. A first motion trajectory of the first locking switch during the switchover between the locking state and the unlocking state may interfere with a third motion trajectory of the first switch 520 during the switchover between the state of starting the electric motor 410 and the state of stopping the electric motor 410 so that the first locking switch has the function of preventing the first switch 520 from starting the electric motor 410. In addition, a second motion trajectory of the second locking switch during the switchover between the locking state and the unlocking state may also interfere with the third motion trajectory so that the second locking switch has the function of preventing the first switch 520 from starting the electric motor 410. However, in this example, the first motion trajectory and the second motion trajectory do not interfere with each other, and the first locking switch and the second locking switch independently have a locking function. In some examples, the first locking switch may be disposed on the upper surface of the top handle 50, for example, the first locking switch is located above the first switch 520, and the second locking switch may be disposed on the body portion 110 of the housing 10 and located below the first switch 520.

The side handle 60 is an auxiliary gripping member when the user uses the chainsaw 100. The side handle 60 is disposed on the left or right side of the body portion 110 of the housing 10 and disposed on the same side as the motor portion 120 of the housing 10. In this example, the guide plate 20 and the chain 30 are on the right side of the body portion 110, and the side handle 60 and the motor portion 120 are on the left side of the body portion 110. To ensure the compact structure of the chainsaw 100, the side handle 60 may be U-shaped and configured to be close to the outer edge of the motor portion 120 of the housing 10. A projection of the side handle 60 and a projection of the motor portion 120 along the front and rear direction may coincide, and a projection of the side handle 60 and a projection of the motor portion 120 along the left and right direction may coincide. The side handle 60 has a handle upper end 611 and a handle lower end 612. The handle upper end 611 and/or the handle lower end 612 may be connected to the body portion 110 and/or the top handle 50 of the housing 10.

In some examples, a third included angle between a second gripping axis 601 of the side handle 60 and the guide plate center line 201 of the guide plate 20 is greater than or equal to 30° and less than or equal to 80°.

In some examples, a second included angle between the second gripping axis 601 of the side handle 60 and the first gripping axis 501 of the top handle 50 is greater than or equal to 40° and less than or equal to 80°, so as to be close to the posture of the two hands of a user normally holding the chainsaw 100. Thus, the hand feel of the user during use is improved. In other examples, the second included angle between the second gripping axis 601 and the first gripping axis 501 is greater than or equal to 45° and less than or equal to 75°. In other examples, the second included angle between the second gripping axis 601 and the first gripping axis 501 is greater than or equal to 50° and less than or equal to 70°. In this example, the handle front end 511 is higher than the handle rear end 512, and the handle upper end 611 is in front of the handle lower end 612, so the first intersection point of the second gripping axis 601 and the first gripping axis 501 is on the front side of the side handle 60.

In some examples, as shown in FIG. 8, the first intersection point of the second gripping axis 601 of the side handle 60 and the first gripping axis 501 of the top handle 50 is at the front end of the side handle 60. The ratio of a first horizontal distance L1 from the first intersection point to the rearmost side of the body portion 110 of the housing 10 along the front and rear direction to a second horizontal distance L2 from the first intersection point to the motor shaft of the electric motor 410 along the front and rear direction is less than or equal to 3.6.

In some examples, the handle upper end 611 of the side handle 60 is in front of the handle lower end 612, the handle upper end 611 is connected to the handle front end 511 of the top handle 50, and the handle lower end 612 is connected to the lower portion of the body portion 110 of the housing 10. In other examples, the handle upper end 611 is connected to the handle front end 511, and the handle lower end 612 is suspended. In other examples, the handle lower end 612 is connected to the lower portion of the body portion 110 of the housing 10, and the handle upper end 611 is suspended. In some examples, when the upper handle end 611 of the side handle 60 is connected to the top handle 50, a recess may be provided at the joint between the upper handle end 611 and the top handle 50 for the user to place the thumb when holding the chainsaw 100. This configuration aims to improve the holding feel of the chainsaw 100. In other examples, a part for improving the holding feel may be disposed at another position of the side handle 60.

In some examples, the projection of the side handle 60 and a projection of the drive assembly 40 along the left and right direction partially coincide. In some examples, the projection of the side handle 60 and a projection of the electric motor 410 along the left and right direction partially coincide, or furthermore, the projection of the side handle 60 and a projection of the motor shaft along the left and right direction partially coincide. In other examples, the projection of the side handle 60 and a projection of the transmission assembly 420 along the left and right direction partially coincide.

The power supply device 200 is configured to supply power to at least the electric motor 410 in the drive assembly 40 and may also supply power to the circuit board assembly 70 to be described below. The power supply device 200 is detachably connected to the power supply mounting portion 113 behind the intermediate portion 112 of the housing 10 of the chainsaw 100. In this example, the power supply device 200 is a battery pack and may be inserted into the power supply mounting portion 113 of the body portion 110 of the housing 10 at a certain angle. In some examples, the included angle between a normal vector 101 of a support surface of the chainsaw 100 placed horizontally and the direction 103 in which the battery pack 200 is plugged into or unplugged from the power supply mounting portion 113 is less than or equal to 30°. In other examples, the included angle between the normal vector 101 of the support surface of the chainsaw 100 placed horizontally and the direction 103 in which the battery pack 200 is plugged or unplugged is greater than or equal to 5° and less than or equal to 20°.

As shown in FIG. 5, FIG. 11, and FIG. 12, in some examples, the power supply mounting portion 113 is configured to be L-shaped behind the intermediate portion 112 of the housing 10. The power supply mounting portion 113 includes a power supply connection portion 1131 and a power supply support portion 1132. The power supply connection portion 1131 includes a connection terminal 1131a to which the power supply device 200 such as a battery pack is detachably connected. The power supply support portion 1132 is formed by a rear end surface 1132a of the housing and a support pedestal 1132b extending rearward from the lower portion of the rear end surface 1132a of the housing. When the power supply device 200 is connected to the power supply mounting portion 113, the power supply device 200 is supported by the power supply support portion 1132 and transmits electrical energy to the electric motor 410 and the like through the connection terminal 1131a of the power supply connection portion 1131. In some examples, the power supply mounting portion 113 includes no battery compartment, and the power supply device 200 is supported only by the rear end surface 1132a of the housing and the support pedestal 1132b. In other examples, the power supply mounting portion 113 further includes a power supply wrapping portion. The power supply wrapping portion is disposed rearward from the rear end surface 1132a of the housing to support and wrap part of the power supply device 200, for example, the upper portion of the power supply device 200, so as to replace the battery compartment. In the preceding example, the power supply device 200 is supported and protected, the reliable connection for supplying power is provided, and the structure related to the power supply is simplified. Thus, the weight of the chainsaw 100 is reduced, thereby improving the hand feel and experience of the user.

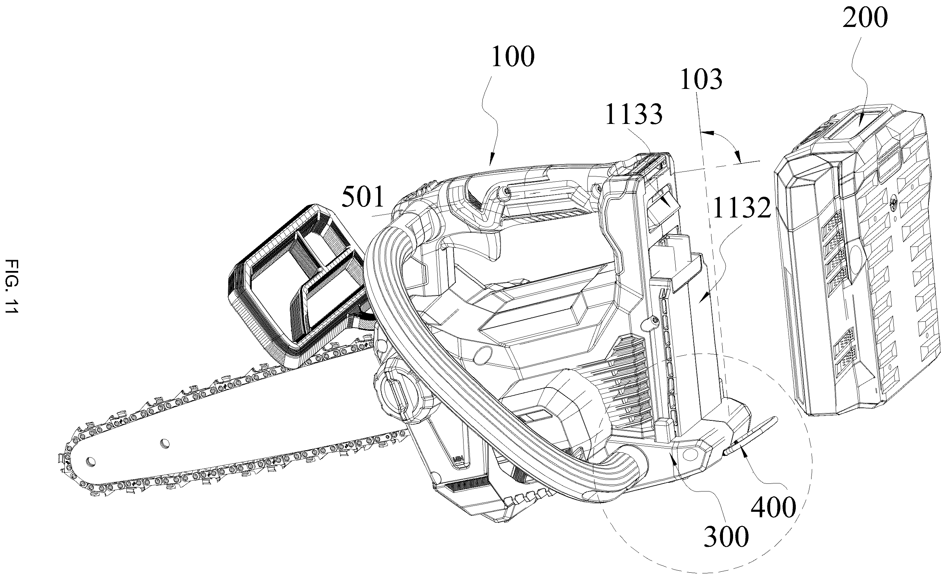

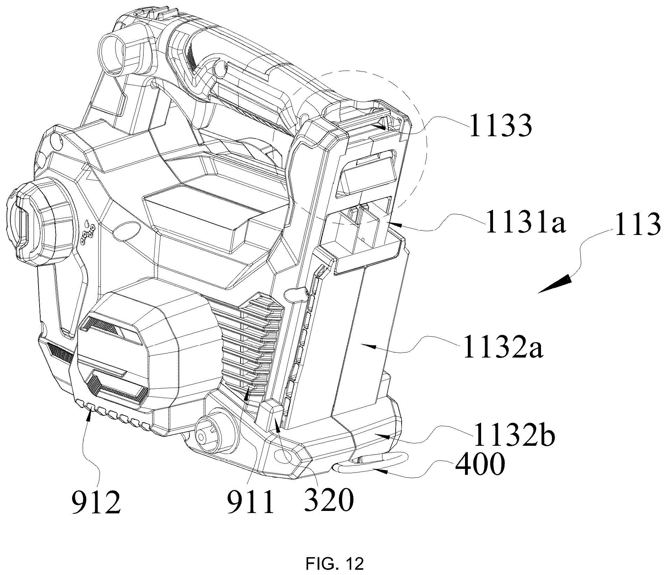

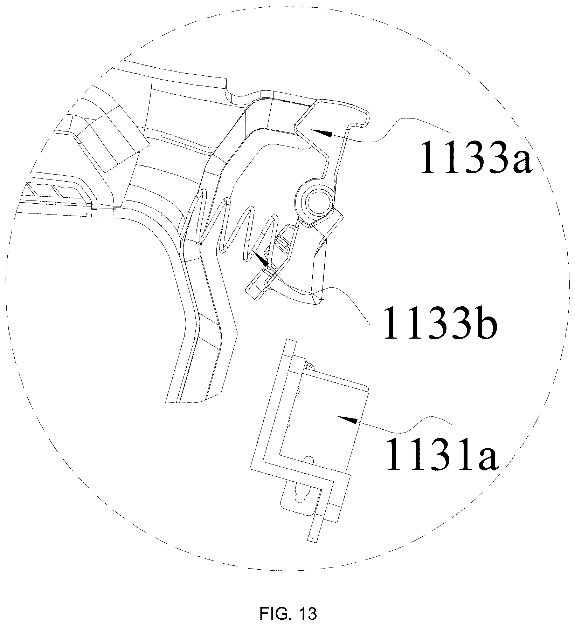

As shown in FIGS. 11 to 13, in some examples, the power supply mounting portion 113 is further provided with a power supply unlocking member 1133 for the user to operate to disengage the power supply device 200 from the power supply mounting portion 113. The power supply unlocking member 1133 may be constituted by a rotary member 1133a rotatable about a shaft and a biasing member 1133b. The rotary member 1133a is rotatably connected to the power supply mounting portion 113 and is rotatable between a first position shown in FIG. 12 and a second position shown in FIG. 13. The rotary member 1133a is located at the first position in the case where the power supply device 200 is not mounted to the power supply mounting portion 113 or after the power supply device 200 is mounted to the power supply mounting portion 113. The rotary member 1133a rotates between the first position and the second position in the process where the power supply device 200 is inserted into the power supply mounting portion 113 or in the process where the power supply unlocking member 1133 is operated by the user to disengage the power supply device 200 from the power supply mounting portion 113. In some examples, the position at which the rotary member 1133a is located after the power supply device 200 is mounted may be different from the position at which the rotary member 1133a is located when the power supply device 200 is not mounted. For example, when the power supply device 200 is not mounted, the rotary member 1133a is located at the first position, and after the power supply device 200 is mounted, the rotary member 1133a is located at a third position.

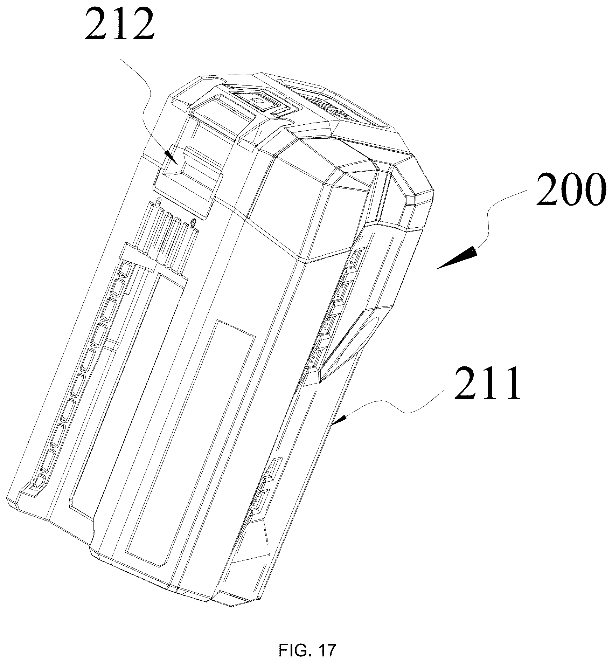

In some examples, as shown in FIG. 17, a limit slot 212 is formed on a surface of the power supply device 200. The limit slot 212 faces the rear end surface 1132a of the housing in the process where the power supply device 200 is mounted to the power supply mounting portion 113. After the power supply device 200 is inserted into the power supply mounting portion 113, the limit slot 212 mates with the preceding power supply unlocking member 1133 to lock the power supply device 200 at the first position.

Specifically, the rotary member 1133a of the preceding power supply unlocking member 1133 includes a rotary portion and a first end and a second end that are disposed on two sides of the rotary portion, respectively. The biasing member 1133b abuts against the housing 10 and the second end of the rotary member 1133a. When the power supply device 200 is not mounted, the rotary member 1133a is free of an external force and located at the first position, and the biasing member 1133b stretches. In the mounting process of the power supply device 200, the power supply device 200 moving on an insertion path pushes the second end of the rotary member 1133a to push the rotary member 1133a to rotate toward the second position, the second end of the rotary member 1133a and the housing 10 collectively compress the biasing member 1133b. The second end of the rotary member 1133a is embedded into the limit slot 212 till the power supply device 200 reaches a final mounting position and the limit slot 212 on the surface of the power supply device 200 moves to the second end of the rotary member 1133a. The biasing member 1133b restores the rotary member 1133a from the second position to the first position, and the power supply device 200 cannot move on the insertion path anymore. When the first end of the rotary member 1133a of the power supply unlocking member 1133 is operated by the user, the rotary member 1133a is pushed by the external force to rotate from the first position to the second position, and the second end of the rotary member 1133a leaves the limit slot 212 so that the power supply device 200 can move again on the insertion path. For example, the power supply device 200 is disengaged from the power supply mounting portion 113 under the action of a power supply ejection mechanism 300 to be described below.

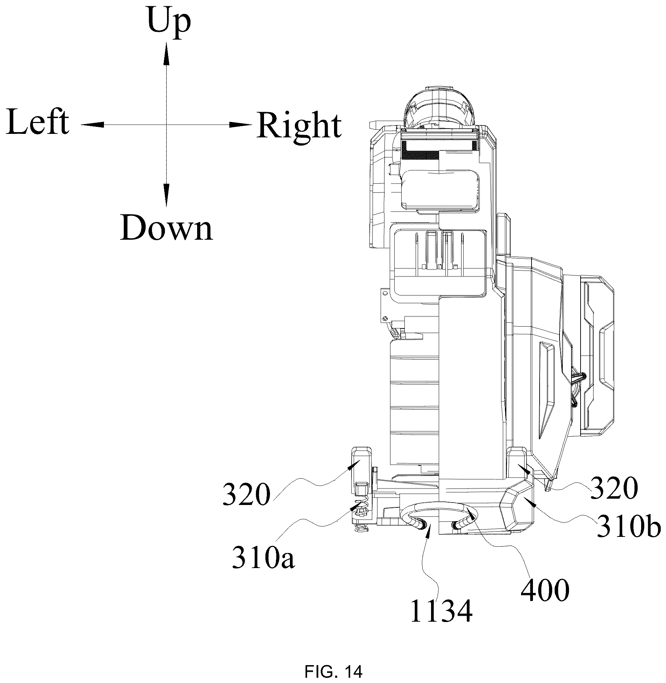

As shown in FIGS. 14 to 17, the chainsaw 100 may further include the power supply ejection mechanism 300 and a hook 400. In the case where the power supply device 200 is mounted to the power supply mounting portion 113, the power supply ejection mechanism 300 and the hook 400 are each located below the power supply device 200. In some examples, the hook 400 is at least partially located below the power supply ejection mechanism 300.

In some examples, the power supply ejection mechanism 300 is at least partially exposed outside the housing 10. In some examples, at least a portion of the power supply ejection mechanism 300 in contact with the power supply device 200 is exposed outside the housing 10. Specifically, the power supply ejection mechanism 300 may include an elastic member 310. The elastic member 310 applies an elastic force to the power supply device 200 to disengage the power supply device 200 from the power supply mounting portion 113 when the power supply unlocking member 1133 is operated by the user. In some examples, the power supply ejection mechanism 300 includes two elastic members: a first elastic member 310a and a second elastic member 310b. The first elastic member 310a and the second elastic member 310b may be disposed on the left and right sides of the lower portion of the power supply mounting portion 113, respectively. In other examples, the power supply ejection mechanism 300 may include a single elastic member or more elastic members, and the position of the single elastic member or the positions of the elastic members may be adaptively adjusted.

In some examples, when the power supply device 200 is mounted, the elastic member 310 is in direct contact with the power supply device 200. The elastic member 310 has a contact portion in contact with the power supply device 200, and the contact portion is exposed outside the housing 10. For example, the elastic member 310 includes two spring contacts. The two spring contacts are disposed on the left and right sides of the lower portion of the power supply mounting portion 113, respectively. The two spring contacts extend out of the housing 10 along the left and right direction, and a portion of each of the spring contacts exposed outside the housing 10 abuts against the power supply device 200.

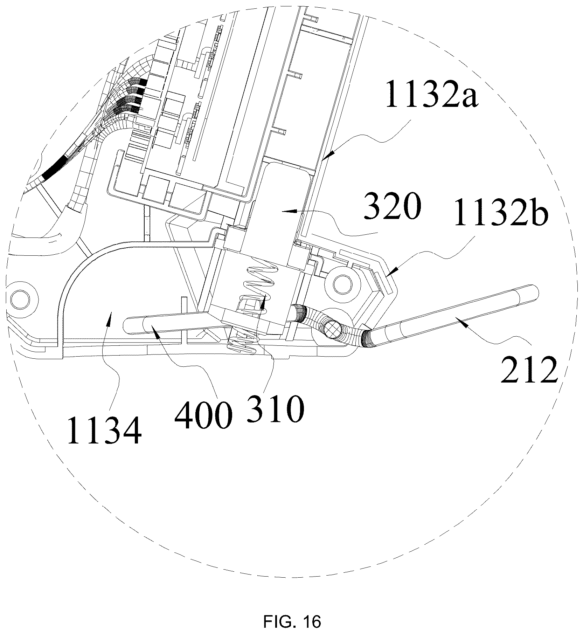

In some examples, as shown in FIG. 16, the power supply ejection mechanism 300 further includes a contact member 320 in addition to the elastic member 310. When the power supply device 200 is mounted to the power supply mounting portion 113, one end of the contact member 320 abuts against the power supply device 200, the other end of the contact member 320 abuts against the elastic member 310, and at least part of the contact member 320 is exposed outside the housing 10. In the case where the power supply device 200 is mounted, the elastic member 310 is in a compressed state and is subjected to pressure from the housing 10 and pressure from the power supply device 200 through the contact member 320. In this example, the elastic member 310 may be a spring, and the contact member 320 is a cube or a cylinder that is hollow inside. The spring extends into the cube or the cylinder from the lower surface of the cube or the lower surface of the cylinder. The lower portion of the power supply mounting portion 113 is provided with a through hole for the contact member 320 to extend out. A limit portion for limiting the contact member 320 from being disengaged from the power supply mounting portion 113 is provided on the lower surface of the contact member 320 along a direction away from the center of the through hole. When the power supply device 200 is not mounted, the elastic force of the elastic member 310 causes the contact member 320 to extend out of the through hole and be exposed outside the housing 10. In addition, the contact member 320 is not disengaged from the power supply mounting portion 113 due to the restriction of the limit portion. After the power supply device 200 is mounted to the power supply mounting portion 113, the weight of the power supply device 200 compresses the contact member 320 into the through hole, and the volume of the contact member 320 exposed outside the housing 10 is reduced.

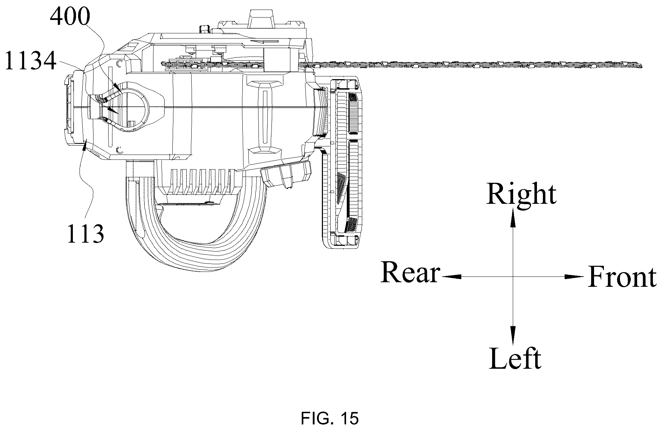

In some examples, as shown in FIG. 15, a storage slot 114 facing upward is formed on the lower surface of the power supply mounting portion 113 of the housing 10. The hook 400 is accommodated in the storage slot 114 in a storage state and extends out of the storage slot 114 in a hanging state. A specific shape of the storage slot 114 is not limited and may be adaptively adjusted.

In some examples, the power supply ejection mechanism 300 includes the first elastic member 310a and the second elastic member 310b that are disposed on the left and right sides of the lower portion of the power supply mounting portion 113, respectively. The storage slot 1134 may be at least partially provided between the first elastic member 310a and the second elastic member 310b in the left and right direction. In some examples, the first elastic member 310a and the second elastic member 310b may be springs extending into the cube or the cylinder. In a projection of the chainsaw 100 in the left and right direction, the height range of the storage slot 1134 along the up and down direction may overlap with the height range of each of the springs in the up and down direction, and a projection of the storage slot 1134 may partially coincide with the power supply ejection mechanism 300. In other examples, the first elastic member 310a and the second elastic member 310b may be spring contacts. In the projection of the chainsaw 100 in the left and right direction, the height range of the storage slot 1134 along the up and down direction may not overlap with the height range of the power supply ejection mechanism 300 in the up and down direction, the highest point of the storage slot 1134 along the up and down direction is lower than the lowest point of each of the spring contacts in the up and down direction, and the projections thereof may not coincide.

In some examples, the ejection direction of the power supply ejection mechanism 300 acting on the power supply device 200, that is, the direction 103 in which the power supply device 200 is plugged or unplugged is substantially perpendicular to the first gripping axis 501 of the top handle 50. In some cases, the ejection direction 103 of the power supply ejection mechanism 300 acting on the power supply device 200 is the direction 103 in which the power supply device 200 is plugged or unplugged. The direction 103 in which the power supply device 200 is plugged or unplugged is substantially perpendicular to the first gripping axis 501 of the top handle 50. In some examples, the included angle between the preceding ejection direction 103 and the first gripping axis 501 is greater than or equal to 80° and less than or equal to 100°. In other examples, the included angle between the preceding ejection direction 103 and the first gripping axis 501 is greater than or equal to 85° and less than or equal to 95°. In some examples, the included angle between the preceding ejection direction 103 and the first gripping axis 501 is greater than or equal to 70° and less than or equal to 120°.

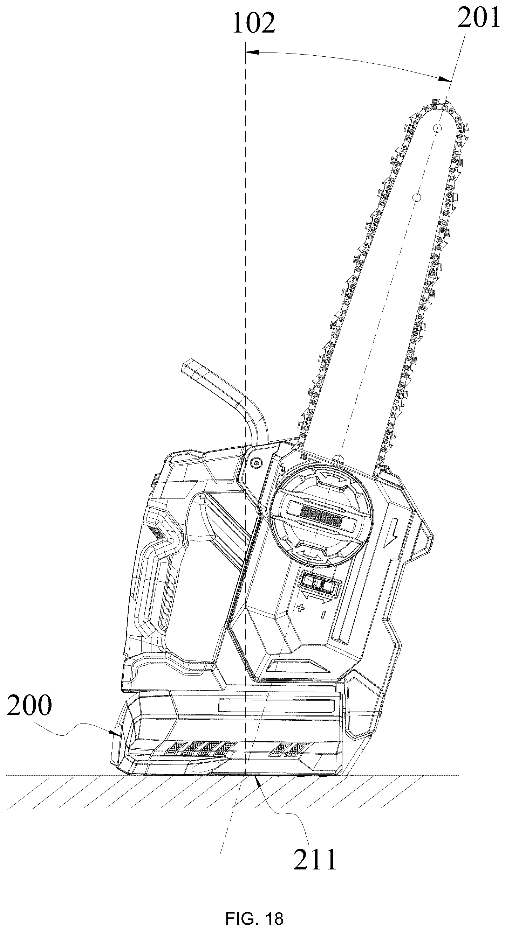

As shown in FIGS. 18 to 20, the chainsaw 100 can be horizontally or vertically placed and remain stable in the case where the power supply device 200 is mounted or not mounted to the chainsaw 100. Thus, the user can conveniently place the chainsaw 100. Accordingly, the chainsaw 100 is convenient to use and safer, and injuries caused by unstable placement of the chainsaw can be avoided.

As shown in FIG. 18, the power supply device 200 of the chainsaw 100 has a first support unit 211. In the case where the power supply device 200 is mounted, when the chainsaw 100 is placed vertically, the first support unit 211 can support the chainsaw 100 to stand stably. When the chainsaw 100 stands stably, the guide plate center line 201 of the guide plate 20 is substantially perpendicular to a support surface. In some examples, the included angle between the guide plate center line 201 and a normal vector 102 of the support surface of the chainsaw 100 placed vertically is less than or equal to 20°. In an example, the included angle between the guide plate center line 201 and the normal vector 102 of the support surface of the chainsaw 100 placed vertically is 15°. In this case, the center of gravity of the chainsaw 100 is substantially located near the central symmetry plane of the intermediate portion 112 of the housing 10. In this example, the first support unit 211 on the power supply device 200 is a surface support unit. It is to be understood that the first support unit disposed on the power supply device 200 may be multiple line support units or multiple point support units or a combination of a point, a surface, and a line.

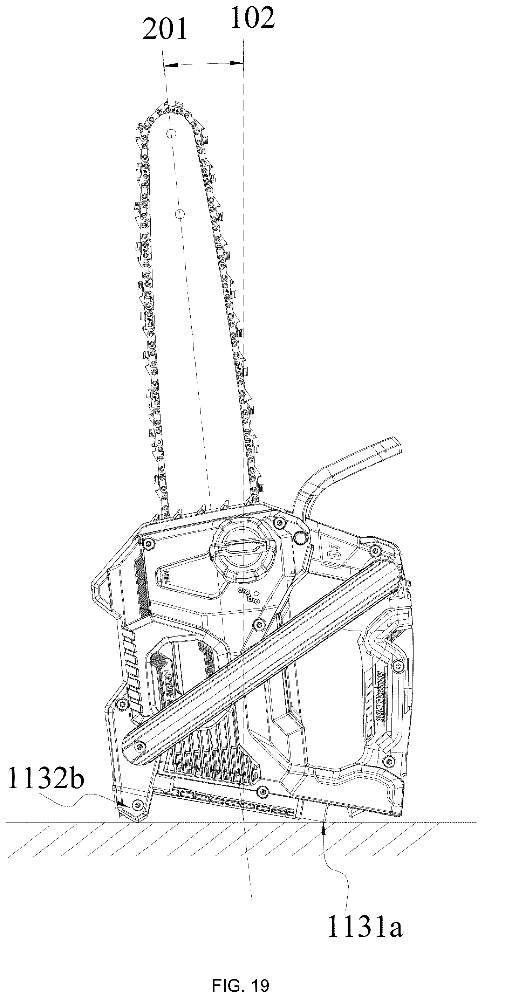

As shown in FIG. 19, the power supply connection portion 1131 of the chainsaw 100 has a second support unit, and the power supply support portion 1132 of the chainsaw 100 has a third support unit. In the case where the power supply device 200 is not mounted, when the chainsaw 100 is vertically placed, the second support unit and the third support unit can collectively support the chainsaw 100 to stably stand. In an example, the included angle between the guide plate center line 201 and the normal vector 102 of the support surface of the chainsaw 100 vertically placed is 5°. In this case, the center of gravity of the chainsaw 100 is substantially located near the central symmetry plane of the intermediate portion 112 of the housing 10. In this example, the second support unit of the power supply connection portion 1131 is a point support unit. In some examples, the second support unit is the connection terminal 1131a of the power supply connection portion 1131. In addition, the third support unit of the power supply support portion 1132 is a point support unit. In some examples, the third support unit is on the support pedestal 1132b of the power supply support portion 1132. It is to be understood that the second support unit disposed on the power supply connection portion 1131 or the third support unit disposed on the power supply support portion 1132 may be a line support unit or a combination of a point and a line.

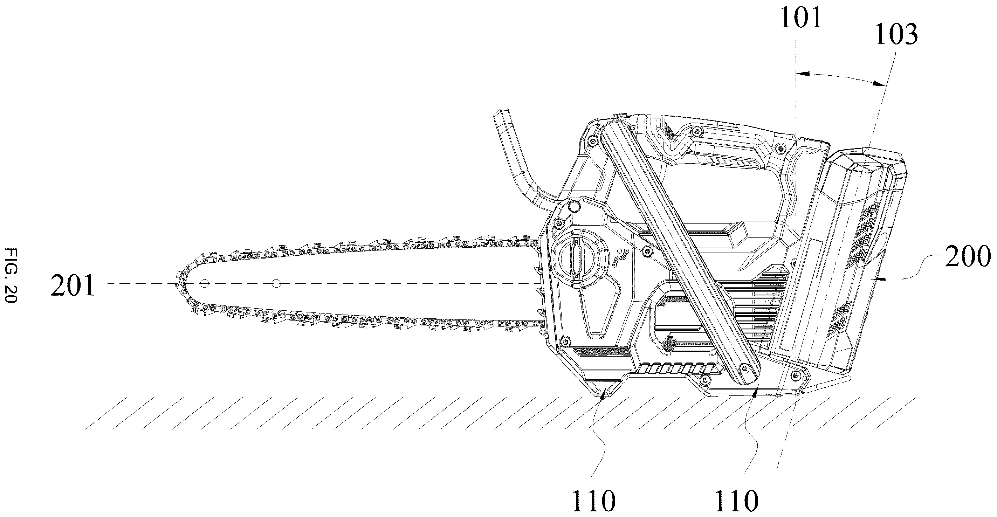

As shown in FIG. 20, the lower surface of the body portion 110 of the housing 10 of the chainsaw 100 is provided with a fourth support unit and a fifth support unit. In the case where the power supply device 200 is mounted or not mounted, when the chainsaw 100 is horizontally placed, the fourth support unit and the fifth support unit collectively support the chainsaw 100 to maintain balance. In this example, the fourth support unit at the lower portion of the body portion 110 of the housing 10 is a line support unit, and the fifth support unit is a surface support unit. The fourth support unit is in front of the fifth support unit. It is to be understood that the manner in which the fourth support unit and the fifth support unit disposed on the lower surface of the body portion 110 of the housing 10 are configured is not unique. The fourth support unit and the fifth support unit may be other combinations of points, surfaces, and lines.

As shown in FIG. 2 and FIGS. 4 to 6, in some examples, the chainsaw 100 further includes the oil supply assembly 80 and the circuit board assembly 70. The oil supply assembly 80 may include an oil can 810 and an oil pumping mechanism 820. The oil can 810 is loaded with lubricant configured to lubricate the chain 30 of the chainsaw 100. The oil can 810 may be disposed in the accommodation space at the front portion of the housing 10. The oil pumping mechanism 820 may be disposed between the electric motor 410 and the first gripping axis 501 of the top handle 50. In the working process of the chainsaw 100, the oil pumping mechanism 820 may pump the lubricant in the oil can 810 to the chain 30 to lubricate the chain 30. The circuit board assembly 70 may be integrated with at least circuit components related to the control of the electric motor 410 and may be disposed in the accommodation space at the rear portion of the housing 10. Specifically, the rear portion of the housing 10 may be the rear portion of the intermediate portion 112 of the housing 10 below the handle rear end 512 of the top handle 50. In this example, the circuit board assembly 70 may be obliquely placed at the rear portion of the housing 10 in the manner of intersecting with the guide plate center line 201 of the guide plate 20. The inclination angle is substantially the same as the direction in which the power supply device 200 such as a battery pack is inserted into the power supply mounting portion 113 of the chainsaw 100. In some examples, the included angle between the circuit board assembly 70 and the normal vector 101 of the support surface of the chainsaw 100 placed horizontally is less than or equal to 30°. In other examples, the included angle between the circuit board assembly 70 and the normal vector 101 of the support surface of the chainsaw 100 placed horizontally is greater than or equal to 5° and less than or equal to 20°.

In the positional relationship, the oil supply assembly 80 is disposed between the guide plate 20 and the drive assembly 40, and the circuit board assembly 70 is disposed between the drive assembly 40 and the power supply device 200 in the front and rear direction. In other words, in the front and rear direction, the oil supply assembly 80, the drive assembly 40, and the circuit board assembly 70 are sequentially disposed in the housing 10 of the chainsaw 100 from front to back, the guide plate 20 and the chain 30 are disposed in front of the housing 10 of the chainsaw 100, and the power supply device 200 is disposed behind the housing 10 of the chainsaw 100. In some examples, projections of any two of the oil supply assembly 80, the drive assembly 40, the circuit board assembly 70, and the power supply device 200 mentioned above along the front and rear direction partially coincide.

As shown in FIG. 2, FIG. 4, and FIG. 5, in some examples, the chainsaw 100 may further include a heat dissipation assembly 90 including a fan, a heat dissipation plate, an airflow inlet and outlet, and the like. The fan may be connected and mounted on the motor shaft. The heat dissipation plate 920 may be disposed between the circuit board assembly 70 and the power supply device 200 in the front and rear direction. The motor portion 120 of the housing 10 is provided with an airflow inlet 911 near the heat dissipation plate and the power supply device 200 and is provided with an airflow outlet 912 near the lower surface of the housing 10. In this example, a heat dissipation airflow in the chainsaw 100 is drawn in from the airflow inlet 911 near the power supply device 200 and the heat dissipation plate 920 under the action of the fan, flows through the heat dissipation plate 920, the circuit board assembly 70, and the drive assembly 40 including the electric motor 410, and is blown out from the airflow outlet 912 at the lower surface of the housing 10.

The chainsaw provided in the present application has the advantage of a compact structure while ensuring the output performance. In addition, the chainsaw can be stably placed horizontally or vertically in the case where the power supply device is mounted or not mounted. Thus, it is convenient to operate the chainsaw, and some safety risks caused by unstable placement are avoided. In addition, the present application further provides the power supply ejection mechanism that is applicable to the preceding chainsaw and disposed below the power supply as well as the hook. The power supply ejection mechanism has the characteristics of a simple structure and reliable utility.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A chainsaw, comprising:
a housing comprising a body portion and a motor portion;
a guide plate extending forward from the body portion;
a chain disposed around the guide plate;
a drive assembly comprising an electric motor, wherein the electric motor is at least partially accommodated in the motor portion;
a top handle disposed and connected on the body portion; and
a side handle disposed on a left side of the body portion or a right side of the body portion;
wherein the motor portion and the side handle are disposed on a same side of the body portion, the body portion comprises a power supply mounting portion, the chainsaw further comprises a power supply device detachably connected to the power supply mounting portion and configured to power at least the electric motor, the power supply device has a first support unit, the first support unit supports the chainsaw to stand, and when the chainsaw stands, an included angle between a guide plate center line of the guide plate and a normal vector of a support surface is less than or equal to 20°.

2. The chainsaw according to claim 1, wherein the first support unit is a surface support unit.

3. The chainsaw according to claim 1, wherein a projection of the electric motor and a projection of the top handle along an up and down direction do not coincide.

4. The chainsaw according to claim 1, wherein a motor diameter of the electric motor is greater than or equal to 30 mm and less than or equal to 38 mm.

5. The chainsaw according to claim 1, wherein the drive assembly further comprises a transmission assembly, the transmission assembly is accommodated in the body portion, and a motor shaft of the electric motor is located below an output shaft of the chainsaw.

6. The chainsaw according to claim 5, wherein a projection of the electric motor and a projection of the side handle along a left and right direction partially coincide, and a projection of the transmission assembly and the projection of the side handle along the left and right direction partially coincide.

7. The chainsaw according to claim 5, wherein a ratio of a weight of a bare machine of the chainsaw to a first weight of the drive assembly is greater than or equal to 7.6, wherein the weight of the bare machine refers to a weight of the chainsaw not assembled with the guide plate, the chain, and the power supply device.

8. The chainsaw according to claim 7, wherein a ratio of average output power of the chainsaw to the weight of the bare machine is greater than or equal to 0.4 W/g and less than or equal to 0.7 W/g.

9. The chainsaw according to claim 1, wherein a ratio of average output power of the chainsaw to an overall length of the housing of the chainsaw is greater than or equal to 4.8 W/mm, wherein the overall length refers to a maximum length of the housing in a front and rear direction.

10. The chainsaw according to claim 1, wherein the chainsaw further comprises a power supply unlocking member for a user to operate to disengage the power supply device from the power supply connection portion.

11. The chainsaw according to claim 10, wherein the power supply connection portion has a second support unit, the power supply support portion has a third support unit, and in a case where the power supply device is not mounted on the chainsaw, the second support unit and the third support unit collectively support the chainsaw to stand.

12. The chainsaw according to claim 10, further comprising a power supply ejection mechanism and a hook, wherein in a case where the power supply device is mounted to the power supply mounting portion, the power supply ejection mechanism and the hook are located below the power supply device, and the power supply ejection mechanism is at least partially exposed outside the housing.

13. The chainsaw according to claim 12, wherein the power supply ejection mechanism comprises a first elastic member and a second elastic member that are disposed on a left side of the power supply mounting portion and a right side of the power supply mounting portion, respectively, the power supply mounting portion is formed with a storage slot facing upward, the hook is accommodated in the storage slot in a storage state, and the storage slot is at least partially located between the first elastic member and the second elastic member in a left and right direction.

14. The chainsaw according to claim 1, wherein the body portion has a rear portion located below a handle rear end of the top handle, the chainsaw further comprises a circuit board assembly disposed in the rear portion of the body portion, and the circuit board assembly is located between the power supply device and the drive assembly in a front and rear direction.

15. The chainsaw according to claim 11, wherein the body portion has a front portion located below a handle front end of the top handle, and the chainsaw further comprises an oil supply assembly, wherein the oil supply assembly comprises an oil can loaded with lubricant for lubricating the chain and disposed in the front portion of the body portion, and the drive assembly is located between the oil supply assembly and a circuit board assembly in a front and rear direction.

16. A chainsaw, comprising:
a housing comprising a body portion and a motor portion;
a guide plate extending forward from the body portion;
a chain disposed around the guide plate;
a drive assembly comprising an electric motor, wherein the electric motor is at least partially accommodated in the motor portion;
a top handle disposed and connected on the body portion; and
a side handle disposed on a left side of the body portion or a right side of the body portion;
wherein the motor portion and the side handle are disposed on a same side of the body portion, the body portion comprises a power supply mounting portion, the chainsaw further comprises a power supply device detachably connected to the power supply mounting portion and configured to power at least the electric motor, the power supply device has a first support unit, and the first support unit supports the chainsaw to stand.

17. A chainsaw, comprising:
a housing comprising a body portion and a motor portion;
a guide plate extending forward from the body portion;
a chain disposed around the guide plate;
a drive assembly comprising an electric motor, wherein the electric motor is at least partially accommodated in the motor portion;
a top handle disposed and connected on the body portion; and
a side handle disposed on a left side of the body portion or a right side of the body portion;
wherein the motor portion and the side handle are disposed on a same side of the body portion, the body portion comprises a power supply mounting portion, the chainsaw further comprises a power supply device detachably connected to the power supply mounting portion and configured to power at least the electric motor, the power supply device has a first support unit, the first support unit supports the chainsaw to stand, and when the chainsaw stands, a guide plate center line of the guide plate is substantially perpendicular to a support surface.

18. The chainsaw according to claim 17, wherein when the chainsaw is placed horizontally, an included angle between a normal vector of the support surface and a direction in which the power supply device is plugged into or unplugged from the power supply mounting portion is less than or equal to 30°.

19. The chainsaw according to claim 17, wherein a first included angle between a first gripping axis of the top handle and the guide plate center line of the guide plate is less than or equal to 10°, and a second included angle between a second gripping axis of the side handle and the first gripping axis is greater than or equal to 40° and less than or equal to 80°.

20. The chainsaw according to claim 17, wherein a rear connection portion connected to the body portion is formed at a rear end of the top handle, and a ratio of a connection width of the rear connection portion to a handle width of the top handle is less than or equal to 2, wherein the connection width refers to a distance between left and right end surfaces of the rear connection portion of the top handle, and the handle width refers to a maximum radial length of a radial section of a grip of the top handle.
